# EUROPEAN PATENT SPECIFICATION

(11) **EP 3 105 294 B1**
(45) Date of publication and mention of the grant of the patent: **31.01.2018**
(21) Application number: 14710622.3
(22) Date of filing: 07.03.2014
(51) Int. Cl.: C09D 11/02, D06P 1/62

(54) **PRINTING INK**
DRUCKTINTE
ENCRE D'IMPRESSION

(30) Priority: 10.02.2014 IN 477MU2014
(43) Date of publication of application: 21.12.2016
(73) Proprietor: Sericol Limited, Broadstairs, Kent CT10 2LE (GB)
(72) Inventor: TAKACS, Mark, Broadstairs Kent CT10 2LE (GB); KAMMILI, Narendra, Pune Maharashtra 412208 (IN)
(74) Representative: Busher, Samantha Jane
(86) International application number: PCT/GB2014/050685
(87) International publication number: WO 2015/118285

(56) References cited:
- GB-A- 2 305 941
- US-A- 4 400 174
- US-A- 5 846 266

## Description

The present invention relates to a printing ink and in particular a printing ink for printing onto fabrics.

Textile or fabric printing is a technique used to apply a pattern or design onto a fabric. There are various methods available for textile printing and an attractive technique for printing onto fabrics is discharge printing.

In discharge printing, the fabric is usually formed of cellulosic fibres or at least predominantly formed of cellulosic fibres and is dyed with a suitable dyestuff, the chromophore of which can be removed by a discharge agent under appropriate conditions. A discharge agent is also known as a chromogen-destroying additive or an activator and acts as a reducing agent. A printing ink is then applied to the dyed fabric, where the printing ink comprises a discharge agent which is capable of destroying the chromogenic system of the dyes under the appropriate conditions (dyes that are dischargeable are reactive dyes, e.g. those containing azo groups). Such conditions usually involve heating and/or steaming. This reduction process results in the removal of colour from the dyed fabric in the areas where the printing ink comprising the discharge agent has been applied which provides a coloured fabric with a design of substantially uncoloured material.

The printing ink may also contain a colouring agent such as a dye or a pigment which is more resistant to the discharge agent than that of the dye in the fabric. When a pigment is present in the printing ink, the ink further comprises a binder for fixing the pigment to the fabric while the discharge process is taking place.

There are a variety of discharge printing processes currently available.

Dry discharge printing is a process where the dyed fabric is printed with a printing ink which contains: a pigment; a binder; urea, a substituted urea or similar humectants; and a discharge agent that is formulated to produce a discharge effect during a drying operation that is designed to fix the pigment to the fabric. Typical conditions for this process may be provided by an oven or dryer set at 170-180°C with a dwell time of 2-3 minutes. This process does not require washing or steaming and is particularly useful because it may be used for finished garments or panels as well as for rolls of fabric.

There are several different discharge agents that may be used for reductive discharge, which can be sorted into two main groups: acid discharge and alkaline discharge. Both types of discharge agents are designed to remove the chromophore from the base dye on the fabric by reduction reactions to produce a pattern or design on the fabric.

The most widely used system is acid discharge, where the discharge agent is a metal salt of formaldehyde sulfoxylic acid, whereby the metal cation is typically zinc, sodium or calcium. Zinc, in the form of zinc formaldehyde sulfoxylate (ZFS), is particularly widely used, and is useful for producing white designs. However, a by-product of this process is formaldehyde, which may be vented to the atmosphere or retained by the fabric. This formaldehyde by-product may be removed by washing the fabric before use. However, this is an additional process step and if this step is omitted, or if the formaldehyde by-product is not completely removed during the washing step, formaldehyde will remain in the fabric, which is hazardous to health.

A less widely used discharge agent is the alkaline discharge, where the discharge agent is thiourea dioxide, which forms formamidine sulfinic acid under alkaline conditions. Like ZFS, this breaks down under reaction conditions to form sulfoxylic acid, which is highly reactive. Unlike ZFS however, formaldehyde is not produced as a by-product of the process, which is advantageous. Such an ink is disclosed in GB 2 305 941. However, since the process takes place in alkaline conditions, the reaction generally forms dark-coloured designs. In addition, alkaline reduction is generally more difficult to achieve compared to acid reduction, owing to the active reaction groups being more difficult to release in alkaline reduction. This means that alkaline reduction may need a steaming process to facilitate this reaction. However, even in the case where steaming is not necessary, the reducing agents tend to be harder to disperse in the alkaline system than those used in acid reduction. This means that such printing inks utilising the alkaline discharge can have a slightly grainy appearance, which is detrimental to printing. Furthermore, the alkaline reducing agents tend to be more hazardous than, for example, ZFS. In this respect, transport, storage and handling are more difficult. Thiourea dioxide, for example, is spontaneously combustible, liberating toxic fumes on burning. It has also been known to combust spontaneously when damp, owing to the hygroscopic nature of the granules.

There is therefore a need in the art for an improved printing ink which comprises a discharge agent for removal of the colour of the dye from a fabric. The printing ink, unlike the current acid system, should not release formaldehyde as a by-product and therefore should not require the additional washing step. Furthermore, the printing ink should, unlike some known alkaline systems which do not release formaldehyde, not require steaming to facilitate the reaction. In addition, the printing ink should also be less hazardous to transport, store and handle and provide an enhanced printing image.

Accordingly, the present invention provides a printing ink comprising: water; a discharge agent having the following formula: 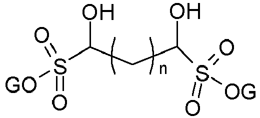 where G represents a group 1 metal and n is 1-6; a sodium, magnesium, zinc or calcium salt; and an amine and/or ammonia.

The ink contains a discharge agent. The discharge agent has the following formula:

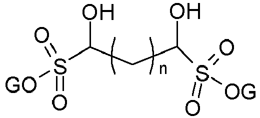

G represents a group 1 metal, preferably sodium or potassium and most preferably sodium. Also, n is 1-6, preferably 2-5 and most preferably 3. In a particularly preferred embodiment, G is sodium and n is 3, i.e. the discharge agent is:

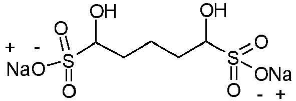

As discussed hereinabove, a discharge agent is also known as a chromogen-destroying additive or an activator and acts as a reducing agent. The specific discharge agent utilised in the ink of the present invention destroys the chromogenic system of the dye in the fabric substrate. This removes the colour from the dyed fabric in the areas where the printing ink comprising the discharging agent has been applied.

Without wishing to be bound by theory, the discharge agent utilised in the printing ink of the present invention breaks down under reaction conditions to form sulphur dioxide, which functions as a reducing agent. Formaldehyde is not produced as a by-product of the process, which is advantageous as a washing step is not required and is less hazardous to health.

Further, the ink which comprises the specific discharge agent does not require steaming to facilitate the reaction and dry heat conditions of a typical nature are sufficient to facilitate the reaction. Such heat treatment includes drying at 170-180°C with a dwell time of 2-3 minutes. It should be noted that steaming conditions can also be applied to the ink of the invention if preferred. Typical steaming conditions include steaming at 102-104°C for several minutes.

The discharge agent and hence the ink of the invention is less hazardous to transport than for example an ink which comprises a discharge agent such as thiourea dioxide. In this respect, the discharge agent used in the ink of the present invention is not hygroscopic, is in the form of a liquid and is hence more easily stored, transported and handled. It is also more easily added to the ink when printing. Reducing agents used for discharge printing are conventionally powders or granules and are therefore harder to dissolve in the ink. This is especially relevant for formaldehyde-free discharge agents, which can be particularly hard to dissolve.

The ink of the present invention also provides an enhanced image as the discharge agent used in the invention disperses easily in the ink, which enhances the image quality on the fabric and reduces the viscosity of the ink, which aids penetration of the ink into the fabric substrate.

The discharge agent may be included at 5-20% by weight, more preferably 7-15% by weight, based on the total weight of the ink. The discharge agent is available commercially as Redutex ACT (from Dystar), typically for cleaning pipework.

The ink of the present invention contains a sodium, magnesium, zinc or calcium salt. Preferably, the salt is a zinc salt. Preferably, the salt is a sulfate, chloride, nitrate or acetate. In a preferred embodiment, the salt is zinc sulfate.

The metal salt may be included at 5-15% by weight, preferably 8-12% by weight, based on the total weight of the ink.

The ink contains an amine and/or ammonia and preferably amine or ammonia. The amine is preferably an aliphatic amine more preferably is selected from mono-ethanolamine, di-ethanolamine, tri-ethanolamine, mono-isopropanolamine and di-isopropanolamine. In a preferred embodiment, the ink comprises ammonia.

The amine or ammonia may be included at 1-5% by weight, based on the total weight of the ink. The water acts as a carrier for the remaining components of the ink.

The ink contains water as the liquid vehicle for the ink. It is a carrier for the components of the ink. The water is present to make up the balance of the ink. It is necessary for water to be present for the reduction process to take place. Typically the reaction temperature is well above 100°C, and where this occurs there is preferably a humectant present in the ink, in order to retain water in the ink film for as long as possible while the reaction takes place. This humectant is preferably urea or a glycol, and most preferably urea. It may be present at 5-35% by weight, preferably 10-40% by weight, based on the total weight of the ink.

The printing ink may also contain a colouring agent. The colouring agent must be more resistant to the discharge agent than that of the dye in the fabric and must also be capable of fixing to the fabric during the printing process. A printing ink comprising a colouring agent and a discharge agent removes the original colour of the dyed fabric and colours the fabric to the colour of the colouring agent of the printing ink. Thus, a design or pattern can be formed in the colour of the printing ink.

The colouring agent is preferably a dye or a pigment.

The dye is preferably a vat dye which is stable to the discharge agent.

The pigment may be either dissolved or dispersed in the liquid medium of the ink. Preferably the colouring agent is a dispersible pigment, of the types known in the art and commercially available such as under the trade-names Paliotol (available from BASF pic), Cinquasia, Irgalite (both available from Ciba Speciality Chemicals) and Hostaperm (available from Clariant UK). The pigment may be of any desired colour such as, for example, Pigment Yellow 13, Pigment Yellow 83, Pigment Red 9, Pigment Red 184, Pigment Blue 15:3, Pigment Green 7, Pigment Violet 19, Pigment Black 7. Especially useful are black and the colours required for trichromatic process printing. Mixtures of pigments may be used.

In one aspect the following pigments are preferred. Cyan: phthalocyanine pigments such as Phthalocyanine blue 15.4. Yellow: azo pigments such as Pigment yellow 120, Pigment yellow 151 and Pigment yellow 155. Magenta: quinacridone pigments, such as Pigment violet 19 or mixed crystal quinacridones such as Cromophtal Jet magenta 2BC and Cinquasia RT-355D. Black: carbon black pigments such as Pigment black 7.

The colouring agent, if present, may be included at 1-30% by weight, preferably 2-10% by weight, based on the total weight of the printing ink.

When a pigment is present in the printing ink as the colouring agent, the ink further comprises a binder for aiding in the fixing of the pigment to the fabric while the discharge process is taking place. The binder which may additionally be present in the printing ink of the present invention is preferably an acrylic or polyurethane resin. The binder helps to fix the pigment to the fabric.

The binder, if present, is included at 5-40% by weight, preferably 10-20% by weight, based on the total weight of the printing ink.

The ink may further comprise a cross-linking agent or catalyst to promote the curing of the binder. Examples of cross-linking agents which may be used are isocyanates and aziridines. These are preferably added to the ink when it is printed in order that the usable life of the ink is not impaired.

The ink of the invention may further comprise other components in the art which improve the properties or performance of the ink. The components may be, for example, thickeners, softening agents, wetting agents, flame proofing additives, biocides and further discharge agents.

The thickener which may additionally be present in the printing ink of the present invention is preferably selected from a polyacrylic acid, a polyurethane, emulsified white spirit, a cellulosic thickener and a guar gum. The thickener, if present, is included at 1-10% by weight, preferably 1-5% by weight, based on the total weight of the ink.

The ink may be prepared by known methods such as stirring with a high-speed water-cooled stirrer or preferably emulsified using a rotor-stator disperser.

The process of the present invention includes applying the printing ink according to the present invention to a dyed fabric. As discussed hereinabove, the printing ink comprises a discharge agent which is capable of destroying the chromogenic system of the dyes. This can be done without the need to apply steaming conditions. This reduction process results in the removal of colour from the dyed fabric in the areas where the printing ink of the present invention has been applied which provides a coloured fabric with a design of substantially uncoloured material. In the case where a colouring agent is present in the printing ink, the colour of the fabric is replaced by the colour of the colouring agent in the areas where the printing ink is applied.

The fabric is usually formed of cellulosic fibres or at least predominantly formed of cellulosic fibres and is dyed with a suitable dyestuff, the chromophore of which can be removed by a discharge agent under appropriate conditions. Thus, in preferred embodiments, the fabric is a dyed fabric and more preferably a dyed cellulose-based fabric.

Discharge printing is particularly suited to "unit printing". That is, where garments or pieces of garments are printed rather than a roll of fabric being printed which is then cut into pieces and made into garments.

The pieces or garments are fixed to the printing base using an adhesive. The printing ink is then applied to the fabric in the desired areas to remove the fabric colour so that a preferred colour may be applied instead. This preferred colour is usually applied as part of the printing ink. However, the decolourised image may also be over-printed with colouring materials applied as part of a secondary printing process. The discharge ink is preferably printed by screen printing.

When the printing ink and the preferred colour have been applied the fabric pieces or garments are removed from the printing base and dried in an oven or belt dryer, typically at 170-180°C for 2-3 mins. After this time the fabric colour will be seen to have been removed in the desired areas and replaced with the preferred colours. The over-printed colours thus produced are resistant to washing.

The invention will now be described with reference to the following examples, which are not intended to be limiting.

### Example 1

An ink was prepared by mixing the components in the given amounts as set out in Table 1. Amounts are given as parts by weight.

**Table 1.**

| **Ingredient** | **Amount (in parts by weight)** |
|---|---|
| Acrylic polymer aqueous emulsion (Texicryl 13-2162 ex Scott Bader) | 25 |
| Urea | 15 |
| Polyacrylic acid thickener (Carrier 382E ex Tennants) | 5 |
| Zinc sulfate | 9 |
| Monopropylene glycol | 6 |
| White spirit as a 25% emulsion in water | 37.5 |
| Ammonia | 2.5 |
| Copper phthalocyanine as an aqueous dispersion (Aquarine Blue 3G ex Tennants) | 6 |
| Organic reducing agent (Redutex ACT ex Regency FCB) | 10 |

A knitted garment panel dyed with Remazol Scarlet RGB (ex Dystar UK Ltd) was screen printed with a design using the above ink and then passed down a drying / curing oven at 180°C with a total heating time of 3 mins. After this time the red colour was removed and replaced with the blue colour which was resistant to washing.

The process was repeated in the absence of ammonia or zinc sulfate and it was found that the red shade was incomplete and the over-printed colour was a dull shade instead of being a vibrant blue colour.

### Example 2

An ink was prepared by mixing the components in the given amounts at set out in Table 2. Amounts are given as parts by weight.

**Table 2.**

| **Ingredient** | **Amount (in parts by weight)** |
|---|---|
| Acrylic polymer aqueous emulsion (Texicryl 13-2162 ex Scott Bader) | 26 |
| Urea | 15 |
| Cellulosic thickener (Natrosol MR250 ex Ashland) | 0.5 |
| White spirit as a 47% emulsion in water | 46 |
| Monopropylene glycol | 2 |
| Zinc sulfate | 8 |
| Ammonia | 2.5 |
| Organic green pigment as aqueous dispersion (Aquarine Green G ex Tennants) | 9 |
| Organic reducing agent (Redutex ACT ex Regency FCB) | 10 |

A knitted garment panel dyed with Remazol Scarlet RGB (ex Dystar UK Ltd) was screen printed with a design using the above ink and then passed down a drying / curing oven at 180°C with a total heating time of 3 mins. After this time the red colour was removed and replaced with the green colour which was resistant to washing.

The process was repeated in the absence of ammonia or zinc sulfate and it was found that the over-printed colour was a dirty-brown colour instead of a bright green.

## Claims

1. A printing ink comprising: water; a discharge agent having the following formula: 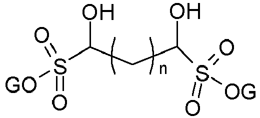 where G represents a group 1 metal and n is 1-6; a sodium, magnesium, zinc or calcium salt; and an amine and/or ammonia.

2. A printing ink according to claim 1, where G represents sodium or potassium.

3. A printing ink according to claim 1 or 2, where n is 2-5.

4. A printing ink according to any preceding claim, wherein the discharge agent is:

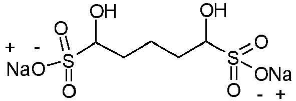

5. A printing ink according to any preceding claim, wherein the salt is a sulfate, chloride, nitrate or acetate.

6. A printing ink according to any preceding claim, wherein the salt is zinc sulfate.

7. A printing ink according to any preceding claim, wherein the amine is present and is selected from mono-ethanolamine, di-ethanolamine, tri-ethanolamine, mono-isopropanolamine and di-isopropanolamine.

8. A printing ink according to any preceding claim, further comprising a colouring agent.

9. A printing ink according to claim 8, wherein the colouring agent is a dye.

10. A printing ink according to claim 8 wherein the colouring agent is a pigment and the printing ink further comprises a binder.

11. A printing ink according to claim 10, wherein the binder is an acrylic or polyurethane resin.

12. A printing ink according to claims 10 or 11, further comprising a cross-linking agent.

13. A printing ink according to any preceding claim, wherein the ink further comprises a humectant.

14. A printing process comprising applying the printing ink according to any preceding claim to a dyed fabric.

15. A printing process according to claim 14, wherein the dyed fabric is a dyed cellulose-based fabric.

## Patentansprüche

1. Druckfarbe umfassend: Wasser; ein Ätzmittel mit der folgenden Formel: 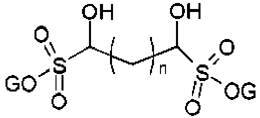 wobei G ein Metall der Gruppe 1 darstellt, und n 1-6; ein Natrium-, Magnesium-, Zink- oder Calciumsalz; und ein Amin und/oder Ammonium ist.

2. Druckfarbe nach Anspruch 1, wobei G Natrium oder Kalium darstellt.

3. Druckfarbe nach Anspruch 1 oder 2, wobei n 2-5 ist.

4. Druckfarbe nach einem vorherigen Anspruch, wobei das Ätzmittel wie folgt ist:

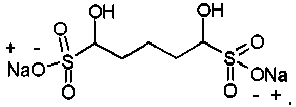

5. Druckfarbe nach einem vorherigen Anspruch, wobei das Salz ein Sulfat, Chlorid, Nitrat oder Acetat ist.

6. Druckfarbe nach einem vorherigen Anspruch, wobei das Salz Zinksulfat ist.

7. Druckfarbe nach einem vorherigen Anspruch, wobei das Amin vorhanden ist und ausgewählt ist aus Monoethanolamin, Diethanolamin, Triethanolamin, Monoisopropanolamin und Diisopropanolamin.

8. Druckfarbe nach einem vorherigen Anspruch, ferner umfassend ein Färbemittel.

9. Druckfarbe nach Anspruch 8, wobei das Färbemittel ein Farbstoff ist.

10. Druckfarbe nach Anspruch 8, wobei das Färbemittel ein Pigment ist und die Druckfarbe ferner einen Binder umfasst.

11. Druckfarbe nach Anspruch 10, wobei der Binder ein Acryl- oder Polyurethan-Harz ist.

12. Druckfarbe nach den Ansprüchen 10 oder 11, ferner umfassend ein Vernetzungsmittel.

13. Druckfarbe nach einem vorherigen Anspruch, wobei die Farbe ferner ein Feuchthaltemittel umfasst.

14. Druckverfahren, umfassend ein Anwenden der Druckfarbe nach einem vorherigen Anspruch auf einen gefärbten Stoff.

15. Druckverfahren nach Anspruch 14, wobei der gefärbte Stoff ein gefärbter cellulosebasierter Stoff ist.

## Revendications

1. Encre d'impression comprenant : de l'eau, un agent de décharge ayant la formule suivante : 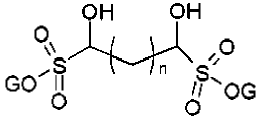 où G représente un métal de groupe 1 et n est 1-6 ; un sel de sodium, de magnésium, de zinc ou de calcium ; et une amine et/ou l'ammoniac.

2. Encre d'impression selon la revendication 1, dans laquelle G représente le sodium ou le potassium.

3. Encre d'impression selon la revendication 1 ou 2, où n est 2-5.

4. Encre d'impression selon l'une quelconque des revendications précédentes, dans laquelle l'agent de décharge est :

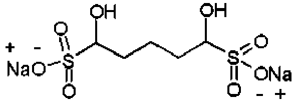

5. Encre d'impression selon l'une quelconque des revendications précédentes, dans laquelle le sel est un sulfate, un chlorure, un nitrate ou un acétate.

6. Encre d'impression selon l'une quelconque des revendications précédentes, dans laquelle le sel est le sulfate de zinc.

7. Encre d'impression selon l'une quelconque des revendications précédentes, dans laquelle l'amine est présente et est sélectionnée entre : monoéthanolamine, diéthanolamine, triéthanolamine, monoisopropanolamine et diisopropanolamine.

8. Encre d'impression selon l'une quelconque des revendications précédentes, comprenant en outre un agent colorant.

9. Encre d'impression selon la revendication 8, dans laquelle l'agent colorant est une teinture.

10. Encre d'impression selon la revendication 8, dans laquelle l'agent colorant est un pigment et l'encre d'impression comprend en outre un liant.

11. Encre d'impression selon la revendication 10, dans laquelle le liant est une résine acrylique ou de polyuréthane.

12. Encre d'impression selon les revendications 10 ou 11, comprenant en outre un agent de réticulation.

13. Encre d'impression selon l'une quelconque des revendications précédentes, l'encre comprenant en outre un humectant.

14. Procédé d'impression comprenant l'application de l'encre d'impression selon l'une quelconque des revendications précédentes à un tissu teint.

15. Procédé d'impression selon la revendication 14, dans lequel le tissu teint est un tissu teint à base de cellulose.
